Europäisches Patentamt

(19) European Patent Office

Office européen des brevets

(11) Veröffentlichungsnummer : **0 056 928**
**B1**

(12) EUROPÄISCHE PATENTSCHRIFT

(45) Veröffentlichungstag der Patentschrift :
11.12.85

(51) Int. Cl.⁴ : **B 65 F   3/28**, B 65 D 88/60,
**B 60 P   1/00**

(21) Anmeldenummer : 81810023.2

(22) Anmeldetag : 27.01.81

(54) Antrieb für eine Ausstosswand in einem Sammelkasten.

(43) Veröffentlichungstag der Anmeldung :
04.08.82 Patentblatt 82/31

(45) Bekanntmachung des Hinweises auf die Patenterteilung : 11.12.85 Patentblatt 85/50

(84) Benannte Vertragsstaaten :
BE CH DE FR GB LI NL SE

(56) Entgegenhaltungen :
DE-A- 1 480 552
GB-A-   670 253
GB-A- 2 036 687
US-A- 2 934 226
US-A- 3 220 586
US-A- 3 252 602
US-A- 4 011 957

(73) Patentinhaber : Ernst Moser AG
Lyssachschachen
CH-3400 Burgdorf (CH)

(72) Erfinder : Fluri, Kurt
Kirchbühl 6
CH-3400 Burgdorf (CH)
Erfinder : Kaufmann, Beat
Dahlienweg
CH-3426 Aefligen (CH)

(74) Vertreter : Steiner, Martin et al
c/o AMMANN PATENTANWAELTE AG BERN
Schwarztorstrasse 31
CH-3001 Bern (CH)

**Beschreibung**

Die vorliegende Erfindung betrifft einen Antrieb für eine Ausstosswand gemäss Oberbegriff des Anspruchs 1. Bei einem bekannten Antrieb dieser Art an einem Fahrzeug zum Ausbringen von Dünger (GB-A-2 036 687) ist die Presse unterhalb eines Teils des Bodens des Laderaums angeordnet und dient dazu, diesen Teil des Bodens mit der Ausstosswand in einer ersten Phase der Ausstossbewegung zurückzuschieben. Das aus einer zweiten Presse bestehende Getriebe verschiebt sodann die Ausstosswand weiter in ihre hinterste Endstellung. Beide Pressen ragen bei ganz zurückgezogener Ausstosswand weit über dieselbe nach vorne, was bei dieser Art von Fahrzeug kein Nachteil ist.

Dieser, für einen Düngerstreuer bestimmte Aufbau eignet sich nicht für andere Anwendungen, insbesondere für die Betätigung einer Ausstosswand in einem Sammelkasten eines Fahrzeuges für die Kehrichtabfuhr. Solche Sammelkasten sind nur am Einfüll- und Ausstossende offen und sonst allseitig dicht geschlossen, und doch soll zwischen der Ausstosswand und der Rückwand des Sammelkastens einerseits und unter dem Boden der Ausstosswand andererseits kein oder möglichst wenig Raum verloren gehen. Auch soll die Presse nicht in Ausstossrichtung über die Ausstosswand vorragen, weil sie sonst beim Ausstossen des Kasteninhalts das Herunterfallen desselben am Ausstossende behindert.

Aufgabe der Erfindung ist es, auch für diese Verhältnisse einen geeigneten Antrieb für die Ausstosswand zu schaffen. Die Lösung dieser Aufgabe ist im kennzeichnenden Teil des Anspruchs 1 umschrieben. Da hierbei die Teleskoppresse bei zurückgezogener Ausstosswand durch eine Oeffnung derselben nach vorne ragt, kann diese Presse genügende Länge aufweisen, ohne zwischen der Ausstosswand und der Rückwand des Sammelkastens viel Raum zu benötigen. Bei voll vorgeschobener Ausstosswand ist dagegen das mit ihr gekuppelte Ende der Teleskoppresse ganz in die Ausstosswand eingefahren und behindert das Ausstossen und Herunterfallen des Inhalts des Sammelkastens nicht. Es sind damit Bedingungen erfüllt, die bei der bekannten Ausführung weder gefordert noch gegeben waren.

Es ist auch ein Antrieb für die Ausstosswand eines Sammelkastens bekannt, bei dem die Teleskoppresse etwa entsprechend der Neigung der Ausstosswand hinter derselben angeordnet und nicht am unteren, sondern in der Nähe des oberen Endes des Sammelkastens abgestützt ist (US-A-2 934 226). Diese Lösung führt jedoch zu Beginn des Ausstossvorganges zu ausserordentlich hohen Kräften und zu einer entsprechend starken und teuren Bemessung der Teleskoppresse des Sammelkastens und der Führung für die Ausstosswand am Boden des Sammelkastens.

Anhand der Zeichnung wird nun ein Ausführungsbeispiel des erfindungsgemässen Antriebs näher erläutert.

Figur 1 zeigt einen Teilvertikalschnitt, und

Figur 2 zeigt einen Teilhorizontalschnitt des Antriebs.

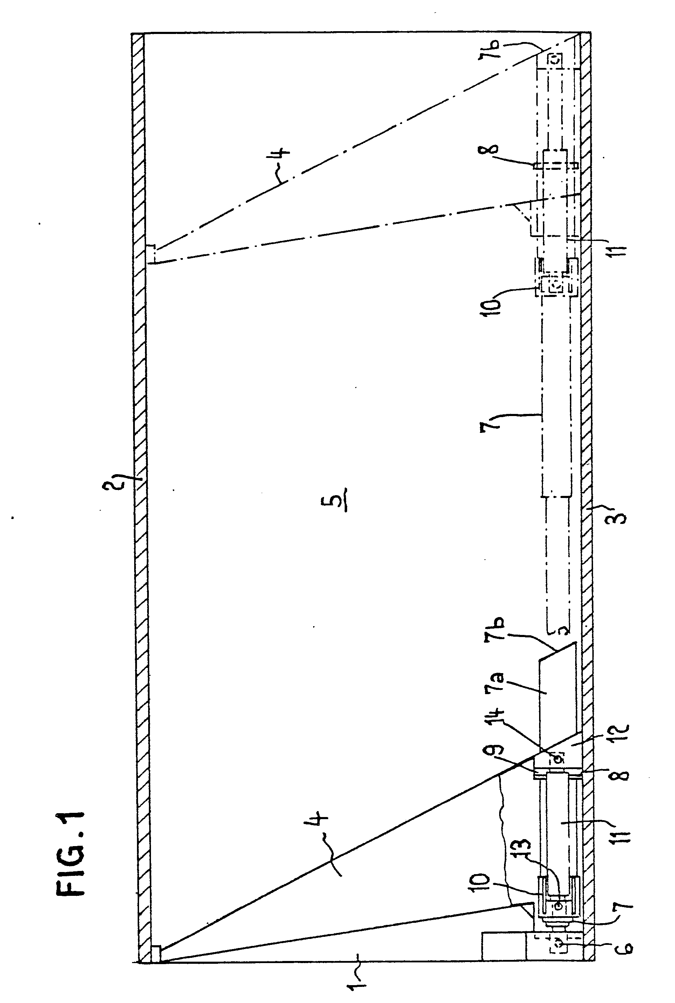

Die Figuren zeigen schematisch Seitenwände 1, die Decke 2 und den Boden 3 des Sammelkastens, in welchem vor der Ausstosswand 4 der Sammelraum 5 gebildet ist. Wie die Figur 1 zeigt, ist die Vorderseite der Ausstosswand nach rückwärts geneigt. Eine nicht dargestellte Führung am Boden 3 des Sammelkastens führt die Ausstosswand 4 bei ihrer Veschiebung von der hinteren Ruhestellung rechts in Figur 1 in ihre vorderste, strichpunktiert dargestellte Ausstosstellung. Soweit entspricht der Aufbau des Sammelkastens und der Ausstosswand 4 bekannten Ausführungen, so dass sich eine eingehendere Darstellung erübrigt.

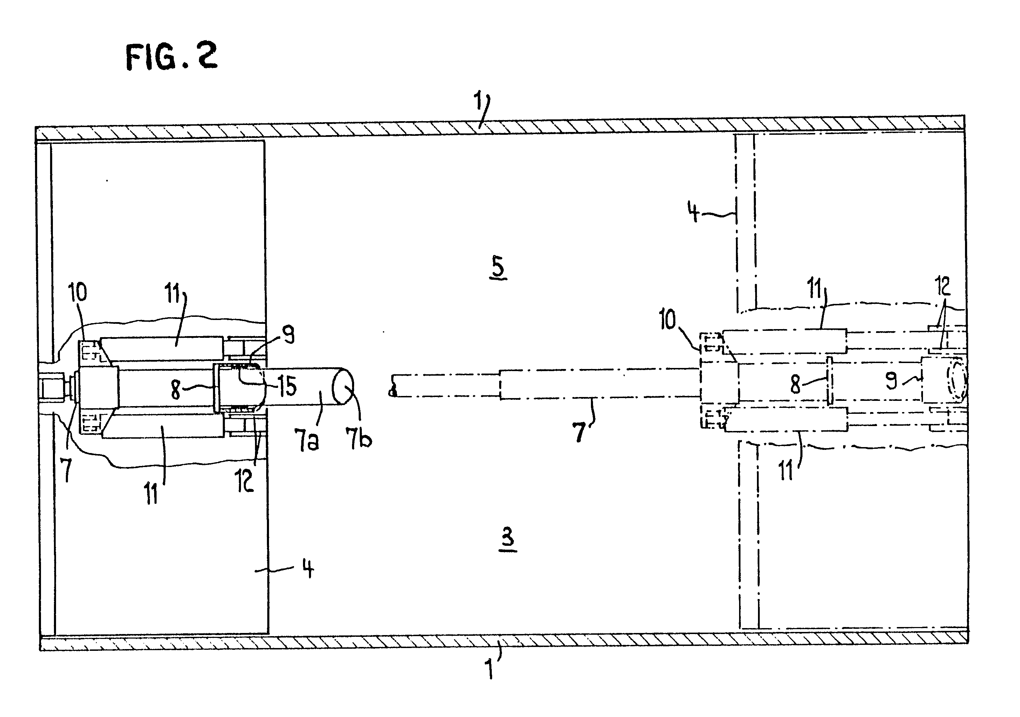

Mittels eines Bolzens 6 ist das hintere Ende einer Teleskoppresse 7 mit einer Stützkonstruktion an der Innenwand des Sammelkastens verbunden. Das äusserste, vorderste Glied 7a der Teleskoppresse 7 weist etwa in der Mitte einen Anschlagring 8 auf, der gemäss Figur 2 bei der Ruhestellung rechts in den Figuren gegen die hintere Stirnseite eines mit der Ausstosswand 4 fest verbundenen Rohrs 9 anliegt. Mit dem hinteren Ende des Gliedes 7a der Teleskoppresse ist ein Joch 10 verbunden, an dem zwei äussere, zur Teleskoppresse 7 symmetrisch angeordnete Hilfspressen 11 verbunden sind. Die anderen Enden der Hilfspressen 11 greifen an Rippen 12 der Ausstosswand 4 an. In der Figur 1 sind die Kupplungsbolzen 13 und 14 an den hinteren und vorderen Enden der Hilfspressen 11 dargestellt. Der Vorderteil des äussersten Gliedes 7a der Telekoppresse kann im Rohr 9 gleiten, wobei eine Dichtung 15 zwischen dem Rohr und dem Teleskopglied 7a das Eindringen von Verunreinigungen aus dem Laderaum 5 hinter die Ausstosswand 4 verhindert. In der Ruhestellung gemäss Figuren 1 und 2 ragt somit die Teleskoppresse 7 durch die Ausstosswand 4 nach vorne, was eine genügend lange Ausführung der Teleskoppresse in ihrem ganz zusammengeschobenen Zustand erlaubt.

Zum Ausstossen eines gesammelten Gutes, beispielsweise Kehricht, aus dem Laderaum 5, wird die Ausstosswand 4 vorne, d.h. aus der Ruhestellung gemäss Figur 1 in die strichpunktierte Ausstosstellung verschoben. Zu diesem Zweck wird vorerst Druckmittel in die Teleskoppresse 7 zugeleitet. Hierbei wird die Kraft vorerst vom vordersten, äussersten Glied 7a der Teleskoppresse über den Anschlagring 8 und das Rohr 9 auf die Ausstosswand übertragen, und dieselbe wird längs ihrer Führung nach vorne verschoben, bis die Teleskoppresse 7 vollständig ausgefahren ist. In dieser Situation hat jedoch die Ausstosswand 4 noch nicht ihre vorderste strichpunktierte Lage nach Figur 2 erreicht, und das Glied 7a der Teleskoppresse 7 ragt immer noch nach vorne. Es wird nun Druckmittel zu den beiden Hilfspressen 11 zugeführt, welche nun die Ausstosswand 4 gegenüber dem vordersten Glied 7a der Teleskoppresse 7 weiter nach vorne schieben, bis sie die strichpunktierte Endstellung erreicht hat. In diesem Falle ist nun die vordere Stirnseite 7b des vordersten Gliedes 7a der Teleskoppresse bündig mit der Vorderseite der Ausstosswand 4 und das Füllgut rutscht über diese Flächen nach unten ab, ohne irgendwo hängen zu bleiben.

Die Rückstellung der Pressen in die Ruhestellung nach links erfolgt unter dem auf die Ausstosswand 4 wirkenden Druck des durch eine Stopfvorrichtung in den Laderaum gepressten Füllgutes. Durch entsprechende Einstellung von Ueberdruckventilen kann hierbei der Druck, bei welchem die Pressen nachgeben sollen, bzw. der Druck, unter welchem die Ausstosswand gegenüber dem Fülldruck zurückweichen soll, in an sich bekannter Weise eingestellt werden. Beim Sammeln von Gütern, die einen derart hohen Fülldruck nicht aushalten würden, könnten umsteuerbare Pressen verwendet werden, um die Ausstosswand 4 hydraulisch in ihre Ruhestellung zurückzubringen.

Die Hilfspressen 11 gestatten eine verhältnismässig einfache Lösung der gestellten Aufgabe. Es sind lediglich flexible Druckmittelzuleitungen erforderlich, die hinter der geneigten Ausstosswand 4 ohne weiteres angebracht werden können. Es wäre allerdings auch denkbar, ein anderes Getriebe vorzusehen, welches die Relativbewegung zwischen der Teleskoppresse 7 und der Ausstosswand 4 am vorderen Ende der Ausstosstrecke bewirken könnte, so könnte beispielsweise zwischen dem vorderen Ende der Teleskoppresse und der Ausstosswand 4 ein Hebelgetriebe, Differentialgetriebe oder Scherengetriebe vorgesehen sein, welches vor dem Ende der Ausstossbewegung gegen Anschläge, Steuerflächen oder dergleichen geeignete Steuerorgane läuft und dann die Ausstosswand 4 gegenüber dem nach wie vor bewegten vorderen Ende der Teleskoppresse nach vorne bewegt.

## Patentansprüche

1. Antrieb für eine Ausstosswand (4), insbesondere in einem Sammelkasten (1-3) eines Fahrzeugs für die Kehrichtabfuhr, mit einer hydraulischen Presse (7) zum Verschieben der Ausstosswand (4) vom inneren Ende (1) des Sammelkastens zum Ausstossende, welche Presse (7) bei zurückgezogener Stellung der Ausstosswand (4) in Ausstossrichtung über dieselbe vorragt, wobei zwischen der Ausstosswand (4) und dem mit ihr gekuppelten Ende (7a) der Presse (7) ein Getriebe (11) angeordnet ist, das die Ausstosswand (4) über das mit ihr gekuppelte Ende (7a) der Presse (7) in Ausstossrichtung vorzuschieben gestattet, dadurch gekennzeichnet, dass die Presse (7) eine Teleskoppresse ist, deren mit der Ausstosswand (4) gekuppeltes Ende (7) bei zurückgezogener Stellung der Ausstosswand (4) verschiebbar durch eine Oeffnung (9) der Ausstosswand (4) vorragt, und dass die Ausstosswand (4) durch das Getriebe (11) über das mit ihr gekuppelte Ende der Teleskoppresse (7) soweit verschiebbar ist, dass die Teleskoppresse bei vorgeschobener Ausstosswand ganz in dieselbe zurückgezogen ist.

2. Antrieb nach Anspruch 1, dadurch gekennzeichnet, dass die Teleskoppresse (7) mit ihrem äussersten Glied (7a) dichtend in der Oeffnung (9) der Ausstosswand (4) geführt und hinter der Ausstosswand mit dem Getriebe (11) gekuppelt ist.

3. Antrieb nach Anspruch 2, dadurch gekennzeichnet, dass das äusserste Glied (7a) durch ein Rohr oder einen Ring (9) der Ausstosswand durchragt und einen Anschlag (8) trägt, der mit der inneren Stirnseite des Rohrs oder Rings zusammenwirkt, wobei das Getriebe Hilfspressen (11) aufweist, die das hintere Ende des äussersten Gliedes (7a) mit der Ausstosswand (4) verbinden.

## Claims

1. Activator means for an ejection plate more particularly in a storage body of a garbage car, with a hydraulic press (7) for moving the ejection plate (4) from the internal end (1) of the body toward the ejection end thereof, said press (7) protruding in the direction of ejection from the ejection plate (4) when the latter is in the withdrawn position, a mechanism (11) being arranged between the ejection plate (4) and the extremity (7a) of the press (7) which is coupled to it, said mechanism permitting to advance the ejection plate (4) in the direction of ejection beyond the extremity (7a) of the press (7) which is coupled to it, characterized in that the press (7) is a telescopic press the extremity (7) thereof which is coupled to the ejection plate (4) being capable to be shifted through an opening (9) of the ejection plate (4) and projecting from said opening when the ejection plate is in the withdrawn position and in that the ejection plate (4) is moved by said mechanism beyond the extremity of the telescopic press which is coupled to it, so that the telescopic press is entirely withdrawn in the ejection plate in the advanced position of the latter.

2. Activator means according to claim 1, characterized in that the telescopic press (7) is tightly guided with its most external element (7a) in the opening (9) of the ejection plate (4) and in that it is coupled with the mechanism (11) behind the ejection plate.

3. Activator means according to claim 2, characterized in that the most external element (7a) runs through the ejection plate within a tube or a ring (9) and bears an abutment (8) cooperating with the inner front face of the tube or ring, the mechanism comprising auxiliary presses (11) connecting the rear extremity of the most external element (7a) to the ejection plate (4).

**Revendications**

1. Dispositif d'entraînement pour la paroi d'éjection (4) notamment d'une benne de chargement (1-3) d'un véhicule de transport d'immondices, avec une presse hydraulique (7) pour déplacer la paroi d'éjection (4) de l'extrémité intérieure (1) de la benne en direction de l'extrémité d'éjection, cette presse (7) dépassant dans la direction d'éjection de la paroi d'éjection (4) lorsque celle-ci est en position retirée, un mécanisme (11) étant disposé entre la paroi d'éjection (4) et l'extrémité (7a) de la presse (7) qui lui est couplée, ce mécanisme permettant d'avancer la paroi d'éjection (4) dans la direction d'éjection au-delà de l'extrémité (7a) de la presse (7) qui lui est couplée, caractérisé en ce que la presse (7) est une presse télescopique dont l'extrémité (7) couplée avec la paroi d'éjection (4) est déplaçable à travers une ouverture (9) de la paroi d'éjection (4) et dépasse de cette ouverture dans la position retirée de la paroi d'éjection (4), et en ce que la paroi d'éjection (4) est déplaçable par le mécanisme (11) au-delà de l'extrémité de la presse télescopique (7) qui lui est couplée, de sorte que la presse télescopique est entièrement retirée dans la paroi d'éjection dans la position avancée de cette dernière.

2. Dispositif d'entraînement selon la revendication 1, caractérisé en ce que la presse télescopique (7) est guidée avec son élément le plus extérieur (7a) de manière étanche dans l'ouverture (9) de la paroi d'éjection (4) et qu'elle est couplée derrière la paroi d'éjection avec le mécanisme (11).

3. Dispositif d'entraînement selon la revendication 2, caractérisé en ce que l'élément le plus extérieur (7a) traverse la paroi d'éjection par un tube ou un anneau (9) et porte une butée (8) coopérant avec la face frontale intérieure du tube ou de l'anneau, le mécanisme comprenant des presses auxiliaires (11) reliant l'extrémité arrière de l'élément le plus extérieur (7a) avec la paroi d'éjection (4).

FIG.1

# FIG.2

0 056 928